# EUROPEAN PATENT SPECIFICATION

(11) **EP 3 915 006 B1**
(45) Date of publication and mention of the grant of the patent: **21.02.2024**
(21) Application number: 20717999.5
(22) Date of filing: 21.02.2020
(51) Int. Cl.: G06F 3/16, G06F 3/04847, G06F 3/14, H04L 12/28, H04L 41/0806, H04L 41/16, H04L 43/0811

(54) **REMOTELY CONTROLLING THE OUTPUT OF CONTENT ON A DEVICE**
FERNSTEUERUNG DER AUSGABE VON INHALTEN AUF EINER VORRICHTUNG
COMMANDE À DISTANCE DE LA SORTIE D'UN CONTENU SUR UN DISPOSITIF

(30) Priority: 22.01.2019 US 201962795499 P; 28.03.2019 US 201962825618 P; 05.12.2019 US 201916705073
(43) Date of publication of application: 01.12.2021
(60) Divisional application: 23211725.9
(73) Proprietor: Apple Inc., Cupertino CA 95014 (US)
(72) Inventor: DE CAMARGO BARSCEVICIUS, Cesar, Cupertino, California 95014 (US); ALSINA, Thomas, Cupertino, California 95014 (US); SCHMIDT, Edward T., Cupertino, California 95014 (US); BENDAHAN, Aurie, Cupertino, California 95014 (US); HINES, Noah C., Cupertino, California 95014 (US); COOLS-LARTIGUE, Jonathan T., Cupertino, California 95014 (US); JORGENSEN, Cody D., Cupertino, California 95014 (US); BENNETT, Jonathan A., Cupertino, California 95014 (US); CARRIGAN, Taylor G., Cupertino, California 95014 (US); COFFMAN, Patrick L., Cupertino, California 95014 (US)
(74) Representative: COPA Copenhagen Patents
(86) International application number: PCT/US2020/019336
(87) International publication number: WO 2020/154747

(56) References cited:
- US-A1- 2014 176 298
- US-A1- 2018 338 177

## Description

### TECHNICAL FIELD

The present description relates generally to remotely controlling the output of content, including providing a set of controls for remotely controlling the output of content on a device.

### BACKGROUND

A user may be able to select between multiple devices for outputting content. In some cases, the user may use a first device to control the output of content on a second device, as for example disclosed by patent applications US2018/338177A1 or US2014/176298A1.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment for providing a set of controls for remotely controlling the output of content in accordance with one or more implementations.
FIG. 2 illustrates an example device that may implement a system for providing a set of controls for remotely controlling the output of content in accordance with one or more implementations.
FIG. 3 illustrates a flow diagram of an example process for providing a set of controls for remotely controlling the output of content in accordance with one or more implementations.
FIG. 4 illustrates an example user interface of a control application for selecting a device to output content in accordance with one or more implementations.
FIG. 5 illustrates an example of a user interface with a set of controls for remotely controlling the output of content in accordance with one or more implementations.
FIG. 6 illustrates an example of a user interface of a virtual assistant application with a set of controls for remotely controlling the output of content in accordance with one or more implementations.
FIG. 7 illustrates a flow diagram of another example process for providing a set of controls for remotely controlling the output of content in accordance with one or more implementations.
FIG. 8 illustrates a flow diagram of an example process for providing a user interface to output content to a proximate device in accordance with one or more implementations.
FIG. 9 illustrates an example electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

As noted above, a user may be able to remotely select between multiple devices for outputting content. In some cases, the user may wish to use a first device, such as their mobile device, to control the output of content on a second device, such as a digital media player. For example, the first and second devices may be connected to a network (e.g., a local area network), and the second device (e.g., a digital media player connected to a television) may be outputting content such as music and/or video. The user may wish to remotely control the output of the content from his/her first device (e.g., a mobile device such as a smartphone and/or smartwatch), using a set of controls within a user interface provided on the first device.

The subject system enables automatically providing (or surfacing) the controls based on condition(s) being satisfied with respect to the first device, the second device and/or the playback of content. For example, the condition(s) may suggest that the user may prefer and/or intend to remotely control the output of content on the second device using his/her first device.

The first device may determine that user interaction with respect to the first device satisfies a first condition, where the user interaction is associated with the second device. For example, the user interaction may relate to user input received on the first device (e.g., within a remote control application, a virtual assistant application and/or a control application running on the first device), for initiating the output of content (e.g., music, video and/or the like) on the second device.

The first device may further determine (e.g., independent of determining that the user interaction satisfies the first condition) that a status of output of the content on the second device satisfies a second condition. For example, the second condition may correspond with the second device currently outputting the content or having paused output of the content for less than a predefined time period. In accordance with determining that the first and second conditions have been satisfied, the first device may provide a set of controls (e.g., within the lock screen of the first device) for remotely controlling the output of the content on the second device. On the other hand, in accordance with determining that the first and second conditions have not been satisfied, the first may forego providing the set of controls for controlling the output of the content on the second device.

By virtue of providing the controls based on satisfying these predefined condition(s), it is possible to facilitate remotely controlling the playback of content for a user.

In one or more implementations, the subject system further provides for surfacing an interface element to allow a user to select a device to output content, for example, when the user is in the process of selecting content for output, but has not initiated output of the content. For example, a user may be interacting with a media player application running on a first device. The user may be in the process of selecting a content item, from a list of content items, where selecting the content item would result in playback of the content item. Alternatively, the first device may be displaying an interface in which the content item is presented alone (e.g., as part of a profile/summary page for the content item) and is available for playback (e.g., by the user clicking a "play" button). In each of these cases, the subject system may be able to infer a user intent to imminently output content even though the user has not yet selected any particular content to output.

Thus, prior to the device initiating output of the content, the first device surfaces an interface element, selectable by the user, to output content on the second device when one or more conditions are met. For example, the first device may determine whether received user input satisfies a first condition, such as when the received user input is associated with selecting content for output, and the received user input is separate from initiating output of the content. In addition, the first device may further determine whether its positioning relative to a second device satisfies a second condition. For example, the second condition may correspond with the first and second devices being close to each other (e.g., in the same room or within a predefined distance of one another).

In response to detecting that the first and second conditions have been satisfied, the first device provides the interface element to output the content on the second device. For example, the interface element may provide for the user to select an output device (e.g., the second device) from a list of multiple devices. In another example, the interface element may provide for the user to output the content, and the second device may be automatically selected for the output (e.g., based on the user's history of selecting the second device for output). By virtue of surfacing the interface element for outputting the content on the second device, playback of content on different devices may be facilitated for a user.

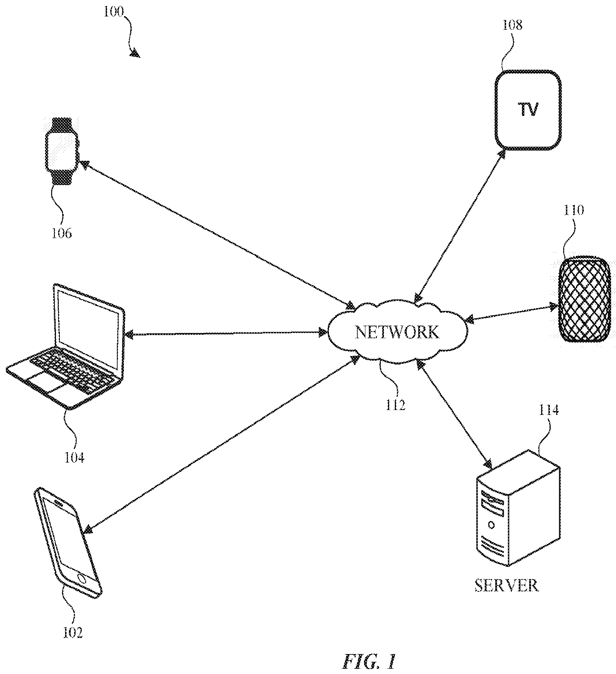

FIG. 1 illustrates an example network environment for providing a set of controls for remotely controlling the output of content in accordance with one or more implementations. Not all of the depicted components may be used in all implementations, however, and one or more implementations may include additional or different components than those shown in the figure. Additional components, different components, or fewer components may be provided.

The network environment 100 includes electronic devices 102, 104, 106, 108 and 110 (hereinafter 102-110), a network 112 and a server 114. The network 112 may communicatively (directly or indirectly) couple, for example, any two or more of the electronic devices 102-110 and the server 114. In one or more implementations, the network 112 may be an interconnected network of devices that may include, and/or may be communicatively coupled to, the Internet. In one or more implementations, the network 112 may correspond to a local area network (e.g., a WiFi network) connecting one or more of the electronic devices 102-110. For explanatory purposes, the network environment 100 is illustrated in FIG. 1 as including electronic devices 102-110 and a single server 114; however, the network environment 100 may include any number of electronic devices and any number of servers.

One or more of the electronic devices 102-110 may be, for example, a portable computing device such as a laptop computer, a smartphone, a smart speaker, a digital media player, a peripheral device (e.g., a digital camera, headphones), a tablet device, a wearable device such as a smartwatch, a band, and the like, or any other appropriate device that includes, for example, one or more wireless interfaces, such as WLAN radios, cellular radios, Bluetooth radios, Zigbee radios, near field communication (NFC) radios, and/or other wireless radios. In FIG. 1, by way of example, the electronic device 102 is depicted as a smartphone, the electronic device 104 is depicted as a laptop computer, the electronic device 106 is depicted as a smartwatch, the electronic device 108 is depicted as a digital media player (e.g., configured to receive digital data such as music and/or video and stream it to a television or other video display), and the electronic device 110 is depicted as a smart speaker.

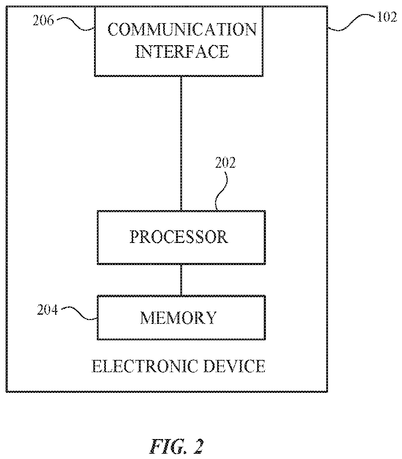

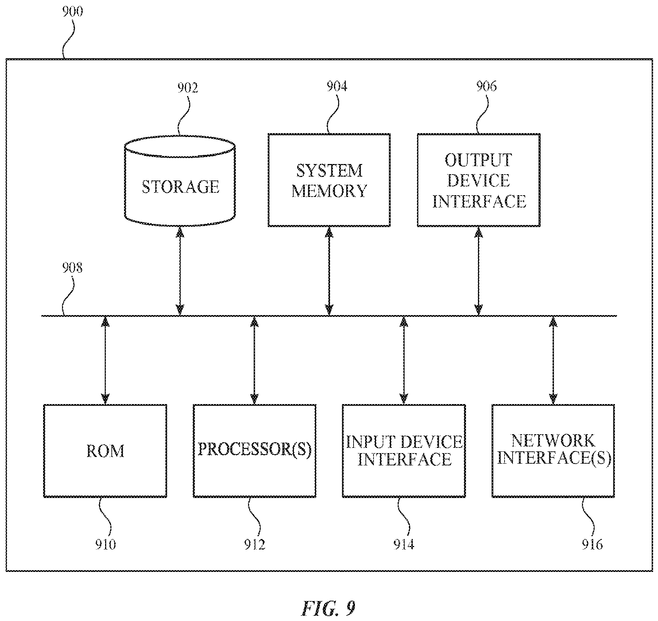

The electronic devices 102-110 may be configured to communicate or otherwise interact with the server 114, for example, to receive digital content from the server 114 for outputting on the respective electronic devices 102-110. Each of the electronic devices 102-110 may be, and/or may include all or part of, the device discussed below with respect to FIG. 2, and/or the electronic system discussed below with respect to FIG. 9.

The server 114 may be, and/or may include all or part of the electronic system discussed below with respect to FIG. 9. The server 114 may include one or more servers, such as a cloud of servers. For explanatory purposes, a single server 114 is shown and discussed with respect to various operations. However, these and other operations discussed herein may be performed by one or more servers, and each different operation may be performed by the same or different servers.

FIG. 2 illustrates an example device that may implement a system for providing a set of controls for remotely controlling the output of content in accordance with one or more implementations. For explanatory purposes, FIG. 2 is primarily described herein with reference to the electronic device 102. However, FIG. 2 may correspond to any of the electronic devices 102-110 of FIG. 1. Not all of the depicted components may be used in all implementations, however, and one or more implementations may include additional or different components than those shown in the figure. Additional components, different components, or fewer components may be provided.

The electronic device 102 may include a processor 202, a memory 204, and a communication interface 206. The processor 202 may include suitable logic, circuitry, and/or code that enable processing data and/or controlling operations of the electronic device 102. In this regard, the processor 202 may be enabled to provide control signals to various other components of the electronic device 102. The processor 202 may also control transfers of data between various portions of the electronic device 102. Additionally, the processor 202 may enable implementation of an operating system or otherwise execute code to manage operations of the electronic device 102.

The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, the memory 204 may store one or more applications for initiating the playback of content, including but not limited to, a control application, a virtual assistant application and/or a remote control application. The memory 204 may further store logic for enabling a lock screen feature, and for providing a set of controls within a user interface of the lock screen.

The communication interface 206 may include suitable logic, circuitry, and/or code that enables wired or wireless communication, such as between any of the electronic devices 102-110 and the server 114 over the network 112. The communication interface 206 may include, for example, one or more of a Bluetooth communication interface, a cellular interface, an NFC interface, a Zigbee communication interface, a WLAN communication interface, a USB communication interface, or generally any communication interface.

In one or more implementations, one or more of the processor 202, the memory 204, the communication interface 206, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

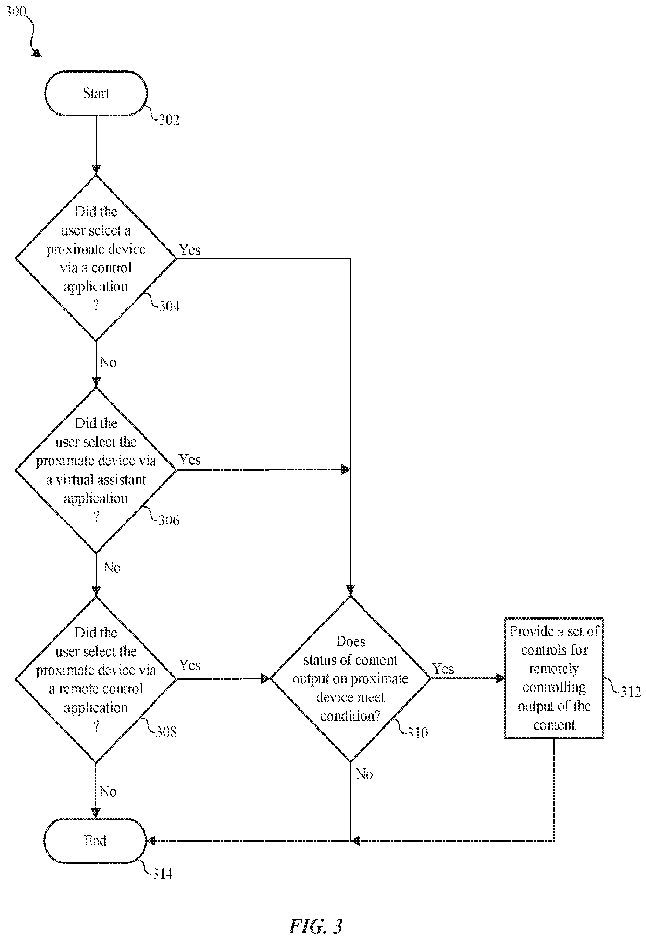

FIG. 3 illustrates a flow diagram of an example process for providing a set of controls for remotely controlling the output of content in accordance with one or more implementations. For explanatory purposes, the process 300 is primarily described herein with reference to the electronic device 102, the electronic device 108 and the server 114 of FIG. 1. However, the process 300 is not limited to the electronic device 102, the electronic device 108 and the server 114 of FIG. 1, and one or more blocks (or operations) of the process 300 may be performed by one or more other components (e.g., of the electronic device 102) and/or other suitable devices (e.g., any of the electronic devices 102-110). Further for explanatory purposes, the blocks of the process 300 are described herein as occurring in serial, or linearly. However, multiple blocks of the process 300 may occur in parallel. In addition, the blocks of the process 300 need not be performed in the order shown and/or one or more blocks of the process 300 need not be performed and/or can be replaced by other operations.

As noted above, the electronic device 102 may provide a set of controls for remotely controlling the output of content on another device (e.g., the electronic device 108). The electronic device 108 may be "proximate" to the electronic device 102, in being on the same local area network as the electronic device 102. The content may be provided to the electronic device 108 for output thereon by the electronic device 102, or by another device such as the server 114. For example, the server 114 may implement a cloud-based service for providing media content to the electronic devices 102-110.

The set of controls may be provided in response to one or more conditions being met with respect to user interaction on the electronic device 102. The conditions include, but are not limited to: user selection of the electronic device 108 (e.g., the proximate device) via a control application running on the electronic device 102 (e.g., corresponding to block 304); user selection of the electronic device 108 via a virtual assistant application running on the electronic device 102 (e.g., corresponding to block 306); and/or user selection of the electronic device 108 via a remote control application running on the electronic device 102 (e.g., corresponding to block 308).

The control application may be implemented as part an operating system running on the electronic device 102, or may be a third party application. In one or more implementations, the control application may provide direct access to predefined settings for the electronic device 102. The control application may be activated, for example, via a predefined user gesture (e.g., swiping up from the bottom of the display of the electronic device 102).

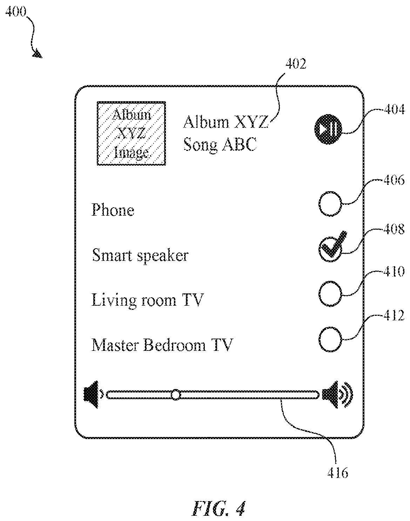

In one or more implementations, the control application may indicate content (e.g., media content) that can be output locally (e.g., on the electronic device 102) and/or output on the proximate device (e.g., the electronic device 108). In this regard, FIG. 4 illustrates an example user interface 400 that may be included as part of a control application running on the electronic device 102, where the user interface 400 provides for selecting a proximate device (e.g., connected via WiFi) to output the media content.

The user interface 400 may include graphical element(s) 402 that identify content for output (e.g., audio, image and/or video content). In the example of FIG. 4, the graphical element(s) 402 indicate a song album, a song name, and a corresponding album image. The user interface 400 further includes a volume control 416, as well as a play/pause button 404 (e.g., to initiate output of the content to a selected one of the proximate devices).

In addition, the user interface 400 lists the proximate devices that may be selected for outputting of the content. The selectable devices may correspond to those that are connected to a local area work (e.g., a WiFi network). In the example of FIG. 4, the user interface 400 includes an option 406 for selecting a smartphone (e.g., the electronic device 102), an option 408 for selecting a smart speaker (e.g., the electronic device 110), an option 410 for selecting a first digital media player (e.g., the electronic device 108) coupled to a living room television, and an option 410 for selecting a second digital media player (not shown) coupled to a master bedroom television.

In one or more implementations, the ordering of the options 406-412 within the user interface 400 may be based on the type of content that is being provided for output (e.g., a song or a movie), and the available devices for output of the content. For example, if the content for output is video content (e.g., a movie, show or other type of video), the electronic device 102 may sort based on the following priority order (highest first): local device (e.g., the electronic device 102); personal device(s) (e.g., a smartwatch); digital media players (e.g., for TVs); and smart speakers.

In another example, if the content for output is for audio content (e.g., music or other audio recordings), the electronic device may sort based on the following order of priorities (highest first): local device (e.g., the electronic device 102); personal device(s) (e.g., headphones, earbuds); smart speakers; and digital media players (e.g., for TVs). Thus, the electronic device 102 may prioritize audio specific (and/or audio-only) output devices (headphones, speakers, etc.) for the output of audio content.

Thus, following start block 302 in FIG. 3, the electronic device 102 determines whether the user had selected a proximate device (e.g., the electronic device 108) for output of content via the control application (e.g., via one of the options 406-412) running on the electronic device 102 (304). If so, then the electronic device 102 determines whether the status of output of content on the electronic device 108 meets a predefined condition (310).

The electronic device 102 may be configured to determine an indication of a playback status (e.g., currently playing, paused, terminated) of content on the electronic device 108, even in cases where the content is being provided to the electronic device 108 by a device (e.g., the server 114) other than the electronic device 102. For example, the electronic device 102 may receive an indication (e.g., via the local area network shared with the electronic device 108) that the content is currently playing, paused (e.g., and an elapsed pause time) and/or terminated (e.g., where the application playing the content is closed by the user or has otherwise been closed, for example, by a system crash).

Based on this information, the electronic device 102 may determine whether a status of output of content on the electronic device 108 satisfies a predefined condition. For example, the condition may be satisfied based on one or more of the following: the content is currently being output on the electronic device 108; paused playback of the content on the electronic device 108 is less than a predefined amount of time (e.g., less than 8 minutes, or less than any configurable amount of time); and/or the playback of the content has not been terminated (e.g., by the user or otherwise, such as the playback application crashing on the electronic device 108).

If the determination at block 310 is positive (the status of the output of content on the electronic device 108 meets the predefined condition), then the electronic device 102 provides a set of controls for remotely controlling the output of the content on the electronic device 102 (312).

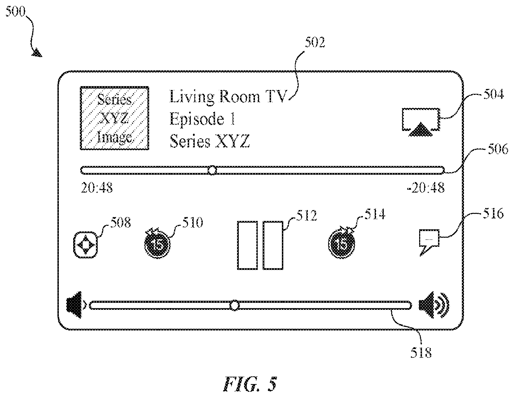

FIG. 5 illustrates an example of a user interface 500 with a set of controls for remotely controlling the output of content in accordance with one or more implementations. The user interface 500 includes graphical element(s) 502 that identify content for output (e.g., audio, image and/or video content). In the example of FIG. 5, the graphical element(s) 502 indicate a device (e.g., living room TV) on which the content is being output, a name of a TV series, and an episode number for the TV series.

The user interface further includes a TV control element 504 (e.g., for selecting the living room TV or other device), a playback control bar 506 for selecting a playback position of the content, a graphical element 508 for selecting supplemental/additional tools for playback of the content, a skip back (e.g., for 15 seconds) button 510, a pause/play toggle 512, a skip forward (e.g., 15 seconds button 514), a message element 516 (e.g., which may invoke a messaging interface for sharing the content and/or messaging others), and an audio level control 518.

In one or more implementations, the set of controls are provided within a lock screen of the electronic device 102. For example, the lock screen may correspond to a visual interface on the electronic device 102 which is available before the user has entered a passcode or otherwise activated the full functionality of the device, and/or appears after a predefined amount of non-use.

If the determination at block 310 is negative (output of content is not detected on the proximate device), then the process ends (block 314). In other words, the electronic device 102 does not provide for the set of controls.

Regarding a virtual assistant application, if the determination at block 304 of FIG. 3 is negative, the electronic device 102 determines whether the user had selected the electronic device 108 for output of content via a virtual assistant application running on the electronic device 102 and/or via a virtual assistant application running on a proximate electronic device (306).

The virtual assistant application may be implemented as part an operating system running on the electronic device 102, or may be a third party application. In one or more implementations, the virtual assistant application may use voice queries and a natural-language user interface to answer questions, make recommendations, and perform actions by delegating requests to a set of services (e.g., Internet services and/or services within a local area network).

In one or more implementations, the virtual assistant application (e.g., running on the electronic device 102) may receive a voice query at the electronic device 102, to output content on the electronic device 108. As noted above, the voice query may instead be received at proximate device (e.g., a smart watch such as the electronic device 106 or a smart speaker such as the electronic device 110). The query may indicate to play music content (e.g., by song name, album name, band name, music genre or the like), video content (e.g., by movie or show name, episode name, genre or the like) and/or other media content. Moreover, the voice query may indicate a device on which the content is to be played (e.g., living room TV, master bedroom TV, kitchen smart speaker or the like).

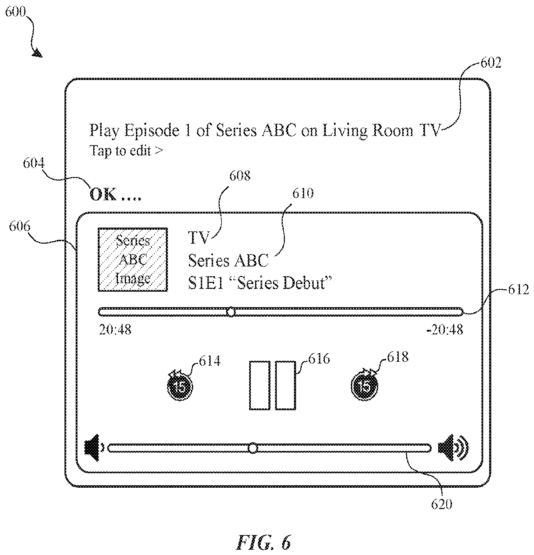

In this regard, FIG. 6 illustrates an example of a user interface 600 of a virtual assistant application with a set of controls for remotely controlling the output of content. In the example of FIG. 6, the user interface 600 indicates a sample voice query 602, input by the user, requesting to "Play Episode 1 of Series ABC on Living Room TV." Thus, the voice query 602 is an example of the user having selected the electronic device 108 for output of content via the virtual assistant application. In response to the voice query 602, the virtual assistant application may provide a visual and/or audio confirmation 604 (e.g., "OK") of having received the voice query.

Thus, if the determination at block 306 is positive (the user had selected the electronic device 108 for output of content via the virtual assistant application), then the electronic device 102 determines whether output of the content is detected on the electronic device 108 (310). As noted above, if the determination at block 310 is positive, then the electronic device 102 provides a set of controls for remotely controlling the output of the content on the electronic device 102 (312). The set of controls may be provided at the electronic device 102, even in a case where the voice query was initially received at a smart watch (e.g., the electronic device 106) or a smart speaker (e.g., the electronic device 110) of the user. The set of controls may be the same as, or different than, those illustrated in FIG. 5. For example, the set of controls may vary based on the type of content being output (e.g., audio or video) and/or the device on which the content is being output (e.g., TV via a digital media player, or a smart phone).

In the example of FIG. 6, the set of controls 606 includes a graphical element 608 indicating a device on which the content is being output, graphical element(s) 610 indicating the content being output, a playback control bar 612 for selecting a playback position of the content, a skip back (e.g., for 15 seconds) button 614, a pause/play toggle 616, a skip forward (e.g., 15 seconds) button 618 and an audio level control 620. In one or more implementations, the set of controls 606 may be provided within a lock screen of the electronic device 102.

If the determination at block 310 is negative (output of content is not detected on the proximate device), then the process ends (block 314). In other words, the electronic device 102 does not provide for the set of controls 606.

Regarding a remote control application, if the determination at block 306 of FIG. 3 is negative, the electronic device 102 determines whether the user had selected the electronic device 108 for output of content via a remote control application running on the electronic device 102 (306).

The remote control application may be implemented as part an operating system running on the electronic device 102, or may be a third party application. In one or more implementations, the remote control application may allow for remote control of a proximate device (e.g., a smart speaker, a digital media player), for example, that is connected on the same local area network (e.g., WiFi) as the electronic device 102.

In one or more implementations, the remote control application (e.g., running on the electronic device 102) may receive user input at the electronic device 102, to play content on the electronic device 108. The user input may indicate to play music content (e.g., a song, album, band, music genre or the like), video content (e.g., movie, show, name, genre or the like) and/or other media content. Moreover, the user input may indicate a device on which the content is to be played (e.g., living room TV, master bedroom TV, kitchen smart speaker or the like).

Thus, if the determination at block 308 is positive (the user had selected the electronic device 108 for output of content via the remote control application), then the electronic device 102 determines whether output of the content is detected on the electronic device 108 (310). As noted above, if the determination at block 310 is positive, then the electronic device 102 provides a set of controls for remotely controlling the output of the content on the electronic device 102 (312). The set of controls may be the same as, or different than, those illustrated in FIG. 5 and/or FIG. 6 (e.g., the set of controls 606). The set of controls may vary based on the type of content being output (e.g., audio or video) and/or the device on which the content is being output (e.g., TV via a digital media player, or a smart phone).

If the determination at block 310 is negative (output of content is not detected on the proximate device), then the process ends (block 314). In other words, the electronic device 102 does not provide for the set of controls 606.

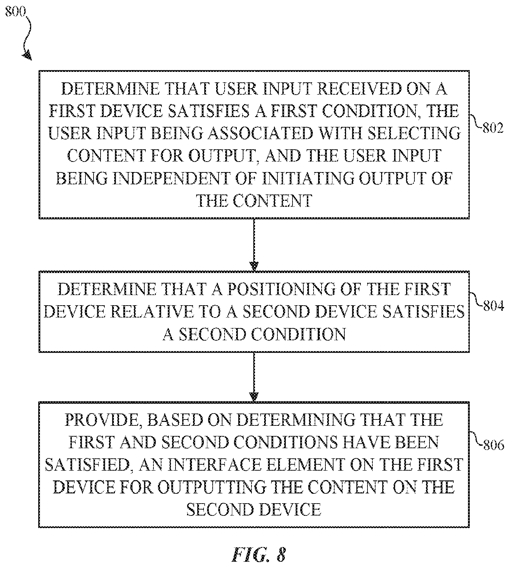

In one or more implementations, and while not illustrated in the example of FIG. 3, the subject system may provide for surfacing the set of controls (e.g., as in FIG. 5 or FIG. 6) in a case where the user had selected a proximate device (e.g., the electronic device 108) via a media player application (e.g., as opposed to a control application, a virtual assistant application and/or a remote control application corresponding to respective operations 304, 306 and 308). For example, the user may have used the media player application (e.g., running on the electronic device 102) to initiate the output of content (e.g., audio and/or video) on the electronic device 108, as described with respect to FIG. 8 below.

As noted above, a set of controls (e.g., as in FIG. 5 or FIG. 6) may be provided for remotely controlling content output on the electronic device 108, e.g., in a case where the content is playing, has been paused for less than a predefined amount of time and/or has not been terminated. Thus, in a case where the content has been paused beyond the predefined amount of time and/or has been terminated, the set of controls may not be provided. It is therefore possible that the set of controls may be provided initially on the electronic device 102 (e.g., before the predefined amount of time has expired and/or before playback has been terminated), and the set of controls may be removed at a later time (e.g., after the predefined amount of time has expired and/or after playback has been terminated).

As also noted above, the set of controls (e.g., as in FIG. 5 or FIG. 6) may be provided for remotely controlling output of the content of on the electronic device 108, in a case where the electronic devices 102 and 108 are connected to the same local area network (e.g., a WiFi network). Thus, in a case where the electronic device 102 is no longer connected to the same local area network via WiFi, the set of controls may not be provided. It is therefore possible that the set of controls may be provided initially on the electronic device 102 (e.g., while connected via WiFi), and the set of controls may be removed at a later time (e.g., when the electronic device 102 out of WiFi range and/or otherwise not connected via WiFi).

In one or more implementations, the user may initiate the playback of content on the electronic device 102, while the set of controls to remotely control playback of content on the electronic device 108 is being provided. In such a case, the set of controls for remotely controlling playback may be removed (or otherwise de-prioritized, e.g., by switching the set of controls to the background) on the electronic device 102. In this manner, a set of controls for controlling the local content (e.g., on the electronic device 102) may be prioritized over the set of controls for remotely controlling the content provided on the electronic device 108.

In one or more implementations, a location of the electronic device 102 (e.g., relative to the electronic device 108) may be used as an alternate or additional parameter in determining whether to provide the set of controls. For example, micro-location technology may provide for determining the location of the electronic device 102 within a structure (e.g., home, building), with a level of precision to determine which room (e.g., or part of a room) the electronic device 102 is in. For example, the electronic device 102 may determine a time of arrival and/or angle of arrival with respect to one or more signals exchanged with the electronic device, such as wideband signals and/or ultra-wideband signals.

In this manner, it is possible to determine at which location the user performed certain user interactions (e.g., where the user was when he/she selected to output content via a control application, a virtual assistant application and/or a remote control application). The micro-location data may be used to determine whether to the provide the set of controls. For example, if the user initiated the playback of content on the electronic device 108 located in a first room, but the user has been in a second room for a predefined amount of time (e.g., based on the location of the electronic device 102), the set of controls may be provided when the user returns to the first room. In another example, the user may not have initiated the playback of content via the electronic device 102, but the set of controls may be provided in a case where the user enters a room in which the electronic device 108 is outputting the content.

Thus, providing the set of controls may be based on whether one or more predefined conditions are satisfied (e.g., user input received at the electronic device 102 via a control application, a virtual assistant application and/or a remote control application, a status of the output being played back on the electronic device 108, micro-location). In one or more implementations, a machine learning model may be generated and/or trained to determine whether the set of controls should be provided.

For example, the machine learning model may be generated and/or trained with input parameters including, but not limited to: prior user interaction received with respect to the control application, virtual assistant application and/or remote control application (e.g., with respect to outputting content to the electronic device 108); user activity indicating the extent to which the set of controls provided to the user for remotely controlling the playback of content on the electronic device 108 were used/helpful to the user; micro-location data of the electronic device 102; playback state; the type of content playing; the time the content was played; in which room the content was played; and/or who initiated the playback of the content. In one or more implementations, the machine learning model may be trained using interaction data associated with a set of users.

After being trained, the machine learning model may be configured to receive similar input parameters in real-time. Based on the input parameters, the machine learning model may be configured to output an indication of whether to provide the set of controls. Alternatively or in addition, the machine learning model may output an indication of which controls to provide for particular proximate devices, and/or a time-to-live for the set of controls.

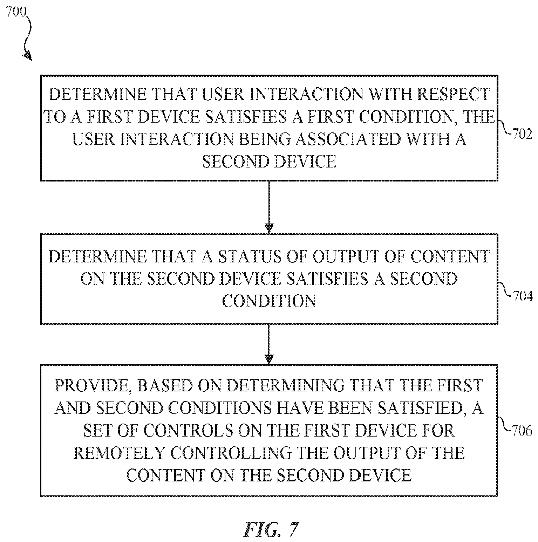

FIG. 7 illustrates a flow diagram of an example process for providing a set of controls for remotely controlling the output of content in accordance with one or more implementations. For explanatory purposes, the process 700 is primarily described herein with reference to the electronic device 102, the electronic device 108 and the server 114 of FIG. 1. However, the process 700 is not limited to the electronic device 102, the electronic device 108 and the server 114 of FIG. 1, and one or more blocks (or operations) of the process 700 may be performed by one or more other components (e.g., of the electronic device 102) and/or other suitable devices (e.g., any of the electronic devices 102-110). Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations.

The electronic device 102 determines that user interaction with respect to the electronic device 102 satisfies a first condition, the user interaction being associated with the electronic device 108 (702). The electronic device 102 and the electronic device 108 may be connected to a local area network. A machine learning model may be used to determine that the user interaction with respect to the electronic device 102 satisfies the first condition.

The user interaction may include user input received on the electronic device 102, for initiating the output of the content on the electronic device 108. The user input may be received within at least one of a remote control application, a virtual assistant application or a control application running on the electronic device 102. Alternatively or in addition, a positioning of the electronic device 102 relative to the electronic device 108 (e.g., using micro-location of the electronic device 102) may be used to determine that the user interaction with respect to the electronic device 102 satisfies the first condition.

The electronic device 102 determines (e.g., independent of determining that the user interaction satisfies the first condition) that a status of output of content on the electronic device 108 satisfies a second condition (704). In one or more implementations, the content output on the electronic device 108 is not provided to the electronic device 108 by the electronic device 102. For example, the content may be provided (e.g., streamed) to the electronic device 108 from the server 114.

Determining that the status satisfies the second condition may include determining that the content is currently being output on the electronic device 108. Alternatively or in addition, determining that the status satisfies the second condition may include determining that the output of content on the electronic device 108 has been paused for less than a predefined amount of time (e.g., less than 8 minutes).

The electronic device 102 provides, based on determining that the first and second conditions have been satisfied, a set of controls on the electronic device 102 for remotely controlling the output of the content on the electronic device 108 (706). The set of controls may be provided within a lock screen of the electronic device 102. On the other hand, the electronic device 102 may forego providing, in accordance with determining that the first and second conditions have not been satisfied, the set of controls on the electronic device 102 for controlling the output of the content on the electronic device 108.

The electronic device 102 may remove the set of controls (e.g., from the lock screen) on the electronic device 102, based on a determination that the electronic device 102 is no longer connected to the local area network. Alternatively or in addition, the electronic device 102 may remove the set of controls (e.g., from the lock screen) on the electronic device 102, based on a determination that the output of the content on the electronic device 108 has been terminated (e.g., where the application playing the content is closed by the user or the application crashed).

FIG. 8 illustrates a flow diagram of an example process for providing a user interface to output content to a proximate device in accordance with one or more implementations. For explanatory purposes, the process 800 is primarily described herein with reference to the electronic device 102, the electronic device 108 and the server 114 of FIG. 1. However, the process 800 is not limited to the electronic device 102, the electronic device 108 and the server 114 of FIG. 1, and one or more blocks (or operations) of the process 800 may be performed by one or more other components (e.g., of the electronic device 102) and/or other suitable devices (e.g., any of the electronic devices 102-110). Further for explanatory purposes, the blocks of the process 800 are described herein as occurring in serial, or linearly. However, multiple blocks of the process 800 may occur in parallel. In addition, the blocks of the process 800 need not be performed in the order shown.

As noted above, the subject system may provide for surfacing an interface element to select an output device (e.g., the electronic device 108), prior to the user having initiated the output of content. The surfacing of such interface element(s) may be based on satisfying one or more predefined conditions. The electronic device 102 and the electronic device 108 may be proximate to each other, for example, connected to a same local area network.

As shown in FIG. 8, the electronic device 102 determines that received user input satisfies a first condition (802). The first condition correspond to the user input being associated with selecting content for output, but independent of (e.g., prior to) initiating the output of the content. For example, the user may be interacting with a media player application running on the electronic device 102. The electronic device 102 determines that there is a high likelihood that the user may be about to select a content item (e.g., a song, playlist, movie, show, series or the like), from a list of content items, where selecting the content item would result in playback of the content item. Alternatively, the electronic device 102 may be displaying an interface in which the content item is presented alone (e.g., as part of a profile/summary page for the content item) and is available for playback (e.g., by the user clicking a "play" button). For example, in each of these cases, the electronic device 102 may determine that there is a high likelihood that the user may be about to (or may have the intent to) output content without having yet initiated outputting the content.

The electronic device 102 then determines that its positioning relative to the electronic device 108 satisfies a second condition (804). For example, the second condition may correspond with the electronic device 102 and the electronic device 108 being close to each other (e.g., in the same room).

As noted above, micro-location technology may be used in determining the location of the electronic device 102 (e.g., and/or the electronic device 108) within a structure (e.g., home, building), with a level of precision to determine which room (e.g., or part of a room) the electronic device 102 is in. For example, the electronic device 102 may determine a time of arrival and/or angle of arrival with respect to one or more signals exchanged with the electronic device, such as wideband signals and/or ultra-wideband signals. In this manner, it is possible to determine at which location the user performed certain user interactions (e.g., where the user was when he/she provided user input associated with selecting content for output, such as navigating through content items or selecting a profile page for a content item, but prior to initiating output of the content). As such, the micro-location data may be used in determining whether the second condition has been satisfied (e.g., whether the electronic device 102 is in the same room as the electronic device 108, or within a predefined distance of the electronic device 108).

Moreover, a machine learning model is used to determine whether the first condition and optionally the second condition have been satisfied. For example, the machine learning model may be generated and/or trained with input parameters from a set of users including, but not limited to: prior user interaction received with respect to media player application(s); user activity indicating the extent to which the interface element(s) provided to the user for outputting content to proximate device(s) was used/helpful to the user; playback state; the type of content playing; the date/time the content was played (e.g., time of day); how much time has elapsed since playback (e.g., with respect to the electronic device 102 and/or the electronic device 108); micro-location data (e.g., in which room(s) the content was played); and/or who initiated the playback of the content. The machine learning model is trained using interaction data associated with a set of users.

After being trained, the machine learning model may be configured to receive similar input parameters in real-time. Based on the input parameters, the machine learning model may be configured to output an indication of whether the first and/or second conditions have been satisfied.

The electronic device 102 provides, based on determining that the first and second conditions have been satisfied (e.g., in conjunction with output from the machine learning model), an interface element on the electronic device 102 for outputting the content on the electronic device 108 (806).

In one or more implementations, the interface element may be surfaced as a list from which the user can select the electronic device 108 from multiple devices. For example, the first and second conditions may have been satisfied with respect to the electronic device 108, as well as one or more other devices (e.g., the electronic device 110). In such a case, the electronic device 102 may present selectable options for the user to select a proximate device (e.g., either the electronic device 108 or the electronic device 110) for outputting the content. For example, such selectable options may be displayed in a manner similar to options 408 and 410 of FIG. 4 (e.g., where the option 408 is for selecting a smart speaker such as the electronic device 110, and the option 410 is for selecting a digital media player such as the electronic device 108). Upon selection of one of the options, output of the content may be initiated on the selected electronic device (e.g., the electronic device 108 or 110).

Alternatively or in addition, the interface element may provide for a selection to simply output the content (e.g., where the user does not select a specific device from among multiple devices), and the electronic device 102 may automatically select the electronic device 108 for output. For example, the user may have previously selected (e.g., a predefined number of times) the electronic device 108 instead of the electronic device 110 for output of content. The predefined number may correspond to a static value and/or may be based on output from the machine learning model (e.g., having been trained with corresponding data sets). In such cases, the interface element may correspond with presenting (e.g., or maintaining the display of, if already being presented): a list of content items, where selecting the content item would result in playback of the content item; or an interface in which the content item is presented alone and is available for playback (e.g., by clicking a "play" button within a profile/summary). Upon selection of one of the options, output of the content may be initiated on the electronic device 108 (e.g. where selection of the electronic device 108 as the output device was automatically determined as discussed above).

With respect to outputting content, the content may be provided to the electronic device 108 by the electronic device 102 (e.g., where the content is wirelessly streamed from the electronic device 102 to the electronic device 108). Alternatively or in addition, the content output on the electronic device 108 may be provided to the electronic device 108 by a device other than the electronic device 102 (e.g., where the server 114 implements a cloud-based service for providing media content to the electronic device 108, e.g., in association with a user account).

As noted above with respect to the description of FIG. 3, while content is being output to the electronic device 108, the subject system may provide for surfacing a set of controls (e.g., on the electronic device 102) to remotely control the output of content on the electronic device 108. In one or more implementations, the surfacing of such controls may be based on predefined condition(s) having been satisfied as described with respect to FIGS. 3-7 herein.

In one or more implementations, in a case where content is being output on either the electronic device 102 or the electronic device 108, and the relative positioning of the devices satisfies a predefined condition (e.g., the devices are within the same room and/or within a predefined distance of one another), the subject system may provide for surfacing interface element(s) to switch the output of content to the other device. For example, if the predefined condition with respect to relative positioning is satisfied, and the electronic device 102 is already locally outputting content, the electronic device 102 may display an interface element to switch the output from the electronic device 102 to the electronic device 108. In another example, if the predefined condition with respect to relative positioning is satisfied, and the electronic device 108 is already outputting content, the electronic device 102 may display an interface element to switch the output from the electronic device 108 to the electronic device 102.

As described above, one aspect of the present technology is the gathering and use of data available from specific and legitimate sources for outputting media content. The present disclosure contemplates that in some instances, this gathered data may include personal information data that uniquely identifies or can be used to identify a specific person. Such personal information data can include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used for outputting media content. Accordingly, use of such personal information data may facilitate transactions (e.g., on-line transactions). Further, other uses for personal information data that benefit the user are also contemplated by the present disclosure. For instance, health and fitness data may be used, in accordance with the user's preferences to provide insights into their general wellness, or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of outputting media content, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

FIG. 9 illustrates an electronic system 900 with which one or more implementations of the subject technology may be implemented. The electronic system 900 can be, and/or can be a part of, one or more of the electronic devices 102-110, and/or one or the server 114 shown in FIG. 1. The electronic system 900 may include various types of computer readable media and interfaces for various other types of computer readable media. The electronic system 900 includes a bus 908, one or more processing unit(s) 912, a system memory 904 (and/or buffer), a ROM 910, a permanent storage device 902, an input device interface 914, an output device interface 906, and one or more network interfaces 916, or subsets and variations thereof.

The bus 908 collectively represents all system, peripheral, and chipset buses that communicatively connect the numerous internal devices of the electronic system 900. In one or more implementations, the bus 908 communicatively connects the one or more processing unit(s) 912 with the ROM 910, the system memory 904, and the permanent storage device 902. From these various memory units, the one or more processing unit(s) 912 retrieves instructions to execute and data to process in order to execute the processes of the subject disclosure. The one or more processing unit(s) 912 can be a single processor or a multi-core processor in different implementations.

The ROM 910 stores static data and instructions that are needed by the one or more processing unit(s) 912 and other modules of the electronic system 900. The permanent storage device 902, on the other hand, may be a read-and-write memory device. The permanent storage device 902 may be a non-volatile memory unit that stores instructions and data even when the electronic system 900 is off. In one or more implementations, a mass-storage device (such as a magnetic or optical disk and its corresponding disk drive) may be used as the permanent storage device 902.

In one or more implementations, a removable storage device (such as a floppy disk, flash drive, and its corresponding disk drive) may be used as the permanent storage device 902. Like the permanent storage device 902, the system memory 904 may be a read-and-write memory device. However, unlike the permanent storage device 902, the system memory 904 may be a volatile read-and-write memory, such as random access memory. The system memory 904 may store any of the instructions and data that one or more processing unit(s) 912 may need at runtime. In one or more implementations, the processes of the subject disclosure are stored in the system memory 904, the permanent storage device 902, and/or the ROM 910. From these various memory units, the one or more processing unit(s) 912 retrieves instructions to execute and data to process in order to execute the processes of one or more implementations.

The bus 908 also connects to the input and output device interfaces 914 and 906. The input device interface 914 enables a user to communicate information and select commands to the electronic system 900. Input devices that may be used with the input device interface 914 may include, for example, alphanumeric keyboards and pointing devices (also called "cursor control devices"). The output device interface 906 may enable, for example, the display of images generated by electronic system 900. Output devices that may be used with the output device interface 906 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 9, the bus 908 also couples the electronic system 900 to one or more networks and/or to one or more network nodes, such as the server 114 shown in FIG. 1, through the one or more network interface(s) 916. In this manner, the electronic system 900 can be a part of a network of computers (such as a LAN, a wide area network ("WAN"), or an Intranet, or a network of networks, such as the Internet. Any or all components of the electronic system 900 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims. Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method, comprising:
determining that user input received on a first device satisfies a first condition, the first condition for the user input being associated with selecting content for output, and the user input being independent of initiating output of the content, wherein a machine learning model is used to determine whether the user input received on the first device satisfies the first condition, wherein the first condition comprises a likelihood of a user selecting the content, and wherein the machine learning model has been trained with user interaction data associated with a set of users;
determining that a positioning of the first device relative to a second device satisfies a second condition comprising the first device being within a predefined distance of the second device; and
providing, based on determining that the first and second conditions have been satisfied, an interface element on the first device for initiating output of the content on the second device.

2. The method of claim 1, further comprising:
receiving user selection of the interface element; and
in response to receiving the user selection, facilitating outputting the content on the second device.

3. The method of claim 2, wherein the content output on the second device is provided to the second device by the first device.

4. The method of claim 2, wherein the content output on the second device is provided to the second device by a device other than the first device.

5. The method of claim 1, wherein the machine learning model is used to determine whether the positioning of the first device relative to the second device satisfies the second condition.

6. The method of claim 1, wherein the interface element provides for selection of the second device, from among plural devices, for the outputting of the content.

7. The method of claim 1, wherein the interface element provides for a selection to output the content, the method further comprising:
automatically selecting the second device, from among plural devices, for the output of the content.

8. The method of claim 7, wherein automatically selecting the second device is based on prior user interaction corresponding to selection of the second device from among the plural devices.

9. The method of claim 1, wherein the first device and the second device are connected to a local area network.

10. The method of claim 1, wherein the user input is received within a media player application running on the first device.

11. The method of claim 1, wherein the user input associated with selecting the content comprises at least one of:
interacting with a media player application running on the first device and including a list of content items, wherein a selection of one of the content items in the list of content items is configured to result in playback of the selected content item, or
causing displaying of another interface in which the content item is presented as part of a profile page for the content item and is available for playback.

12. A device, comprising:
at least one processor; and
a memory including instructions that, when executed by the at least one processor, cause the at least one processor to perform the method of any of claims 1-11.

13. A non-transitory computer-readable medium storing instructions which, when executed by one or more processors, cause the one or more processors to perform the method of any of claims 1-11.

## Patentansprüche

1. Verfahren, umfassend:
Bestimmen, dass eine Benutzereingabe, die auf einer ersten Vorrichtung empfangen wird, eine erste Bedingung erfüllt, wobei die erste Bedingung für die Benutzereingabe einem Auswählen von Inhalt für eine Ausgabe zugeordnet ist, und die Benutzereingabe unabhängig von einem Initiieren der Ausgabe des Inhalts ist, wobei ein Maschinenlernmodell verwendet wird, um zu bestimmen, ob die Benutzereingabe, die auf der ersten Vorrichtung empfangen wird, die erste Bedingung erfüllt, wobei die erste Bedingung eine Wahrscheinlichkeit umfasst, dass ein Benutzer den Inhalt auswählt, und wobei das Maschinenlernmodell mit Benutzerinteraktionsdaten trainiert wurde, die einem Satz von Benutzern zugeordnet sind;
Bestimmen, dass ein Positionieren der ersten Vorrichtung relativ zu einer zweiten Vorrichtung eine zweite Bedingung erfüllt, umfassend dass die erste Vorrichtung innerhalb eines vordefinierten Abstands der zweiten Vorrichtung liegt; und
Bereitstellen, basierend auf dem Bestimmen, dass die erste und die zweite Bedingung erfüllt sind, eines Schnittstellenelements auf der ersten Vorrichtung zum Initiieren der Ausgabe des Inhalts auf der zweiten Vorrichtung.

2. Verfahren nach Anspruch 1, ferner umfassend:
Empfangen einer Benutzerauswahl des Schnittstellenelements; und
als Reaktion auf das Empfangen der Benutzerauswahl, Ermöglichen des Ausgebens des Inhalts auf der zweiten Vorrichtung.

3. Verfahren nach Anspruch 2, wobei die Inhaltsausgabe auf der zweiten Vorrichtung der zweiten Vorrichtung durch die erste Vorrichtung bereitgestellt wird.

4. Verfahren nach Anspruch 2, wobei die Inhaltsausgabe auf der zweiten Vorrichtung der zweiten Vorrichtung durch eine andere Vorrichtung als die erste Vorrichtung bereitgestellt wird.

5. Verfahren nach Anspruch 1, wobei das Maschinenlernmodell verwendet wird, um zu bestimmen, ob das Positionieren der ersten Vorrichtung relativ zu der zweiten Vorrichtung die zweite Bedingung erfüllt.

6. Verfahren nach Anspruch 1, wobei das Schnittstellenelement eine Auswahl der zweiten Vorrichtung unter mehreren Vorrichtungen für das Ausgeben des Inhalts bereitstellt.

7. Verfahren nach Anspruch 1, wobei das Schnittstellenelement eine Auswahl zum Ausgeben des Inhalts bereitstellt, das Verfahren ferner umfassend:
automatisches Auswählen der zweiten Vorrichtung unter mehreren Vorrichtungen für die Ausgabe des Inhalts.

8. Verfahren nach Anspruch 7, wobei das automatische Auswählen der zweiten Vorrichtung auf der vorherigen Benutzerinteraktion basiert, die der Auswahl der zweiten Vorrichtung unter den mehreren Vorrichtungen entspricht.

9. Verfahren nach Anspruch 1, wobei die erste Vorrichtung und die zweite Vorrichtung mit einem lokalen Netzwerk verbunden sind.

10. Verfahren nach Anspruch 1, wobei die Benutzereingabe innerhalb einer Medienwiedergabeanwendung empfangen wird, die auf der ersten Vorrichtung läuft.

11. Verfahren nach Anspruch 1, wobei die Benutzereingabe, die dem Auswählen des Inhalts zugeordnet ist, mindestens eines umfasst von:
Interagieren mit einer Medienwiedergabeanwendung, die auf der ersten Vorrichtung läuft und eine Liste von Inhaltselementen einschließt, wobei eine Auswahl eines der Inhaltselemente in der Liste von Inhaltselementen konfiguriert ist, um zu einer Wiedergabe des ausgewählten Inhaltselements zu führen, oder
Veranlassen einer Anzeige einer anderen Schnittstelle, in der das Inhaltselement als Teil einer Profilseite für das Inhaltselement präsentiert wird und für die Wiedergabe verfügbar ist.

12. Vorrichtung, umfassend:
mindestens einen Prozessor; und
einen Speicher, der Anweisungen einschließt, die, wenn sie durch den mindestens einen Prozessor ausgeführt werden, den mindestens einen Prozessor veranlassen, das Verfahren nach einem der Ansprüche 1 bis 11 durchzuführen.

13. Nichtflüchtiges computerlesbares Medium, das Anweisungen speichert, die, wenn sie durch einen oder mehrere Prozessoren ausgeführt werden, den einen oder die mehreren Prozessoren veranlassen, das Verfahren nach einem der Ansprüche 1 bis 11 durchzuführen.

## Revendications

1. Procédé, comprenant :
la détermination qu'une entrée utilisateur reçue sur un premier dispositif respecte une première condition, la première condition pour l'entrée utilisateur étant associée à la sélection d'un contenu pour sortie, et l'entrée utilisateur étant indépendante de l'initiation d'une sortie du contenu, un modèle d'apprentissage automatique étant utilisé pour déterminer si l'entrée utilisateur reçue sur le premier dispositif respecte la première condition, la première condition comprenant une probabilité qu'un utilisateur sélectionne le contenu, et le modèle d'apprentissage automatique ayant été entraîné avec des données d'interaction d'utilisateur associées à un ensemble d'utilisateurs ;
la détermination qu'un positionnement du premier dispositif par rapport à un second dispositif respecte une seconde condition comprenant le fait que le premier dispositif se trouve à une distance prédéfinie du second dispositif ; et
la fourniture, en fonction de la détermination que les première et seconde conditions ont été respectées, d'un élément d'interface sur le premier dispositif permettant d'initier la sortie du contenu sur le second dispositif.

2. Procédé selon la revendication 1, comprenant en outre :
la réception d'une sélection utilisateur de l'élément d'interface ; et
en réponse à la réception de la sélection utilisateur, le fait de faciliter la sortie du contenu sur le second dispositif.

3. Procédé selon la revendication 2, dans lequel le contenu délivré en sortie sur le second dispositif est fourni au second dispositif par le premier dispositif.

4. Procédé selon la revendication 2, dans lequel le contenu délivré en sortie sur le second dispositif est fourni au second dispositif par un dispositif autre que le premier dispositif.

5. Procédé selon la revendication 1, dans lequel le modèle d'apprentissage automatique est utilisé pour déterminer si le positionnement du premier dispositif par rapport au second dispositif respecte la seconde condition.

6. Procédé selon la revendication 1, dans lequel l'élément d'interface fournit une sélection du second dispositif, parmi plusieurs dispositifs, pour la sortie du contenu.

7. Procédé selon la revendication 1, dans lequel l'élément d'interface fournit une sélection pour délivrer en sortie le contenu, le procédé comprenant en outre :
la sélection automatique du second dispositif, parmi plusieurs dispositifs, pour la sortie du contenu.

8. Procédé selon la revendication 7, dans lequel la sélection automatique du second dispositif est en fonction d'une interaction utilisateur préalable correspondant à la sélection du second dispositif parmi les plusieurs dispositifs.

9. Procédé selon la revendication 1, dans lequel le premier dispositif et le second dispositif sont connectés à un réseau local.

10. Procédé selon la revendication 1, dans lequel l'entrée utilisateur est reçue au sein d'une application de lecteur multimédia en cours d'exécution sur le premier dispositif.

11. Procédé selon la revendication 1, dans lequel l'entrée utilisateur associée à la sélection du contenu comprend au moins l'un parmi :
une interaction avec une application de lecteur multimédia en cours d'exécution sur le premier dispositif et comportant une liste d'éléments de contenu, une sélection de l'un des éléments de contenu dans la liste d'éléments de contenu étant configurée pour résulter en la lecture de l'élément de contenu sélectionné, ou
le fait d'amener l'affichage d'une autre interface dans laquelle l'élément de contenu est présenté dans le cadre d'une page de profil pour l'élément de contenu et est disponible pour lecture.

12. Dispositif comprenant :
au moins un processeur ; et
une mémoire comportant des instructions qui, lorsqu'elles sont exécutées par l'au moins un processeur, amènent l'au moins un processeur à mettre en oeuvre le procédé selon l'une quelconque des revendications 1 à 11.

13. Support non transitoire lisible par ordinateur stockant des instructions qui, lorsqu'elles sont exécutées par un ou plusieurs processeurs, amènent le ou les processeurs à mettre en oeuvre le procédé selon l'une quelconque des revendications 1 à 11.
